# EUROPEAN PATENT SPECIFICATION

(11) **EP 3 134 695 B1**
(45) Date of publication and mention of the grant of the patent: **29.01.2020**
(21) Application number: 15782274.3
(22) Date of filing: 20.04.2015
(51) Int. Cl.: F28D 1/053, F02B 29/04, F28F 1/40, F28F 13/06, F28F 13/08, F28F 13/12, F28D 21/00, F28F 1/02

(54) **HEAT EXCHANGER COMPRISING A CORE OF TUBES**
WÄRMETAUSCHER MIT EINEM KERN AUS ROHREN
ÉCHANGEUR DE CHALEUR COMPRENANT UN FAISCEAU DE TUBES

(30) Priority: 22.04.2014 SE 1450473
(43) Date of publication of application: 01.03.2017
(73) Proprietor: TitanX Holding AB, 294 25 Sölvesborg (SE)
(72) Inventor: CONTET, Arnaud, S-294 39 Sölvesborg (SE); BRORSSON, Anders, S-294 34 Sölvesborg (SE); LOMNITZ, Fredrik, S-374 40 Karlshamn (SE)
(74) Representative: AWA Sweden AB
(86) International application number: PCT/SE2015/050449
(87) International publication number: WO 2015/163811

(56) References cited:
- EP-A2- 1 562 015
- WO-A1-2008/064238
- US-A- 1 893 270
- US-A- 1 893 270
- US-A- 5 765 393
- US-A1- 2004 112 577
- US-A1- 2004 112 577
- US-A1- 2009 014 165
- US-A1- 2009 159 253
- US-A1- 2012 000 634
- US-A1- 2014 048 238

## Description

### Technical Field

The present invention concerns a heat exchanger comprising an inlet tank, having a fluid inlet for a fluid, and an outlet tank, having a fluid outlet for said fluid, and a core of tubes joining said inlet tank and said outlet tank together and creating a plurality of fluid flow paths for said fluid from said inlet tank to said outlet tank, wherein said tubes belong to a primary and a secondary group of tubes.

### Prior Art

A heat exchanger is known from the patent US 4 791 982. The heat exchanger revealed in that patent is a coolant radiator which has a core comprising tubes belonging to a primary and a secondary group of tubes. There is a difference in tube size between the two groups, which is used mainly to improve flow distribution and hence efficiency especially at low flow rates. US 2012/0000634 discloses a heat exchanger for an automotive vehicle comprising a tank and a beam of tubes, received at their extremities in openings of the tank where the tubes are linked to the tank through tube to tank junctions. Some of the tube to tank junctions suffer thermal stress. At least some of the tubes involved in the tube to tank junctions suffering thermal stress have a higher mechanical resistance than the other tubes. US 2012/0000634 discloses a heat exchanger according to the preamble of claim 1.

### Object of the Invention

A drawback of the prior art heat exchanger is that its technical concept is rather limited when it comes to versatility. Since it comprises use of differently sized tubes, it necessitates use of header plates having tube insertion orifices, which are sized and placed according to a unique pattern for each series of heat exchangers. This makes production of small series of heat exchangers inefficient and hampers production versatility.

Against that background an object of the present invention is to improve the known heat exchanger, such that production thereof is simplified and in particular rendered more efficient and versatile.

### Summary of the Invention

According to the invention this is achieved by means of a heat exchanger according to the preamble, said heat exchanger being characterized by the characterising portion of claim 1.

Use of header plates with throughout identical tube insertion orifices, does of course necessitate use of tubes having a throughout identical outer shape, as they otherwise would not fit the header plates. This is however no problem, as tube characteristics can be varied internally in different ways, e.g. by choosing an appropriate tube wall thickness, by providing dimples or turbulators or by using different tube inserts. Hence, the invention renders it possible for instance to efficiently produce small series of adapted heat exchangers by means of identical header plates but different tubes at chosen positions.

According to one embodiment said secondary group of tubes in order to prolong life of the heat exchanger comprises adaptation tubes each providing an enhanced strength compared to a basic strength provided by each one of said base tubes, wherein said adaptation tubes are used in areas of the heat exchanger where stress levels tend to be higher than a medium stress level of the entire heat exchanger. Areas of a heat exchanger where such strengthening tubes are useful are e.g. corner areas of a substantially parellelepipedic heat exchanger core.

According to a further embodiment said adaptation tubes can provide an enhanced strength by having a wall thickness exceeding a wall thickness of the base tubes. Increasing tube wall thickness is an easy way to enhance strength, but if the tubes are sheet metal pipes, which is normal procedure in the art, it requires use of differently gauged sheet metal for the tubes pertaining to the first and the second group, respectively.

According to a further embodiment said adaptation tubes provide an enhanced strength by comprising stiffening inserts arranged in tube openings. Providing stiffening inserts is also an easy way to enhance strength and makes use of tubes having an identical wall thickness possible. However, production, insertion and fastening of such stiffening inserts are aspects to be considered.

According to a further embodiment said adaptation tubes provide an enhanced strength by comprising stiffer turbulators than turbulators arranged in said base tubes. In the art use of so-called turbulators inside of heat exchanger tubes is quite common. In the light of this, use of differently designed turbulators to achieve a heat exchanger according to the invention is an attractive solution.

According to a further embodiment said adaptation tubes provide an enhanced strength by comprising internal stiffening ribs. Internal stiffening ribs can be provided e.g. by embossing sheet metal, of which tubes are produced, accordingly.

According to a further embodiment said adaptation tubes provide an enhanced strength by comprising extra durable tube seams created by means of all smooth tube walls. When producing tubes of sheet metal, a brazing seam running along the tube is created. This seam is rendered more durable if the original sheet is all smooth and void of for instance embossed dimples.

According to a further embodiment said heat exchanger comprises a first row of tubes and a second row of tubes, wherein at least a plurality of the tubes of the first row belong to the primary group of tubes and all tubes of the second row belong to the secondary group of tubes. A solution like this can be advantageous for instance if the heat exchanger is a coolant radiator which is bolted to another unit, such as a charged air cooler, which helps stabilizing the coolant radiator tube row next to it.

According to a further embodiment said secondary group of tubes in order to improve efficiency of the heat exchanger comprises adaptation tubes, each providing a lower flow resistance than a flow resistance provided by each one of said base tubes, wherein said adaptation tubes are arranged in areas of the heat exchanger where fluid flow levels tend to be lower than a medium fluid flow level of the entire heat exchanger. Areas of a heat exchanger where low flow tends to be a problem are mainly areas remote of a fluid in or outlet, areas in the shadow of brackets or the like, and areas immediately beneath a fluid inlet.

According to a further embodiment said adaptation tubes provide a lower flow resistance by comprising turbulators causing a lower flow resistance than turbulators being arranged in said base tubes. As indicated before, turbulators inside of heat exchanger tubes are quite common, and, thus, use of differently designed turbulators to achieve a heat exchanger according to the invention is an attractive solution.

According to a further embodiment said adaptation tubes provide a lower flow resistance by having all smooth walls, while said base tubes have dimpled walls. In the art dimples are used to promote heat exchange. However, dimples do also cause some extra flow resistance, which can effectively be avoided by all smooth tube walls.

According to a further embodiment said heat exchanger comprises a first row of tubes and a second row of tubes, wherein all tubes of the first row belong to the secondary group of tubes and all tubes of the second row belong to the primary group of tubes. A solution like this can be advantageous for instance if the fluid inlet and outlet of the heat exchanger tend to promote flow through the second row.

According to a further embodiment said secondary group comprises adaptation tubes, each providing a lower flow resistance than a flow resistance provided by each one of said base tubes, wherein said adaptation tubes are arranged in the heat exchanger in an alternating pattern mixed with base tubes. A solution like this is advantageous for instance if fluid flow through the heat exchanger is highly dependent on rpm of an engine cooled by means of the heat exchanger. In such a case alternate tubes in a certain pattern help promoting an even flow of fluid through the entire heat exchanger.

According to a further embodiment said adaptation tubes provide a lower flow resistance by comprising turbulators causing a lower flow resistance than turbulators being arranged in said base tubes. The advantage of different turbulators has already been discussed in the above.

According to a further embodiment said adaptation tubes provide a lower flow resistance by having all smooth walls, while said base tubes have dimpled walls. As indicated before, dimples cause some extra flow resistance, which can effectively be avoided by all smooth tube walls.

According to a further embodiment said alternating pattern comprises a row of alternatingly a base tube and an adaptation tube. In some instances it shows to be advantageous to mix tubes in the indicated way to arrive at an optimum fluid flow distribution at all fluid flow rates.

According to a further embodiment said alternating pattern comprises a row of alternatingly two base tubes and an adaptation tube. Again, the purpose of such a solution is to optimize performance of a heat exchanger, especially at low to high fluid flow rates.

According to a further embodiment said secondary group of tubes is subdivided into at least two kinds of differently designed tubes. Use of differently designed tubes for the second group of tubes further enhances versatility of the heat exchanger according to the invention.

### Brief Description of the Drawings

In the drawings embodiments of heat exchangers according to the invention are shown schematically. In the drawings:
Fig. 1 is a view from behind and shows a heat exchanger in the form of a coolant radiator;
Figs. 2 to 13 are views from top and show portions of header plates of different embodiments of the coolant radiator of fig. 1;
Fig. 14 is a view from front and shows a heat exchanger in the form of a charged air cooler; and
Figs. 15 to 20 are views from a side and show portions of header plates of different embodiments of the charged air cooler of fig. 14.

### Description of a Preferred Embodiment

In the following preferred embodiments of the invention are described with reference being had to the drawings. In the drawings like reference signs indicate similar elements.

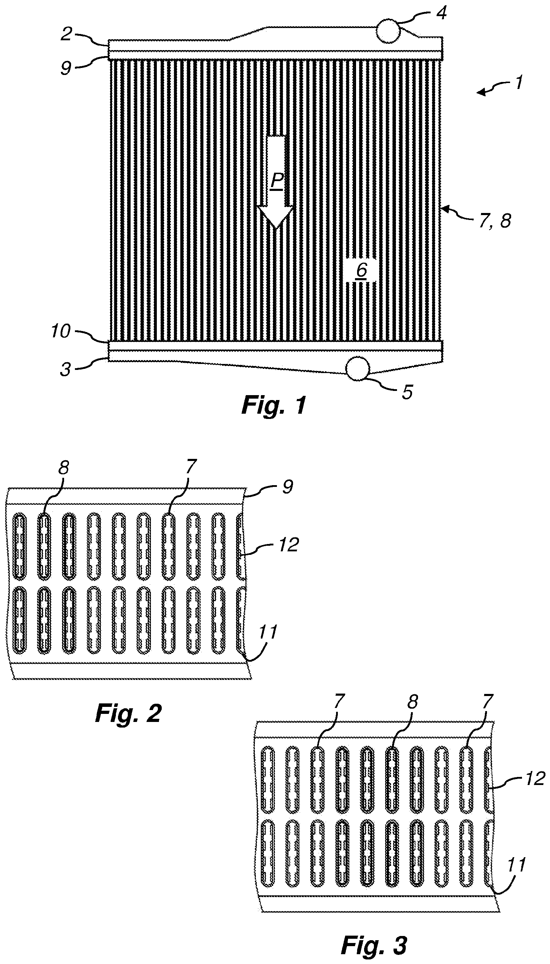

In fig. 1 a heat exchanger 1 is shown in a back view. The heat exchanger 1 shown is a coolant radiator, which has a top inlet tank 2 and a bottom outlet tank 3. Between these is a parallelepipedic radiator core 6, which comprises a plurality of vertical tubes 7, 8 and fins (not shown) there between. The tubes 7, 8 are tightly connected to the tanks 2, 3 by means of header plates 9, 10 of the tanks 2, 3 and are used to lead coolant from a fluid inlet 4 on the inlet tank 2 to a fluid outlet 5 on the outlet tank 3 while being cooled on its way along fluid flow paths illustrated by means of an arrow P.

Portions of the top plate 9 of the heat exchanger 1 are illustrated in greater detail in figs. 2 to 13. In these figures different embodiments of the heat exchanger 1 according to the invention are shown when viewed from above inside the top tank 2. The corresponding view of the opposite or bottom header plate 10 is often identical but need not be. However, having studied the description a person skilled in the art will anyway know how to best implement the present invention.

In order to enhance cooling, tubes 7, 8 of the coolant radiator can comprise dimples, which are shown in figs. 2 to 13, where they are generally depicted 12. The dimples 12 are formed by stamping of the tube sheet metal prior to final assembly of the tubes 7, 8 into their flat shape. As can be seen in figs. 2 to 13 said dimples 12 form small protrusions inside of the tubes 7, 8. The dimples 12 influence fluid flow inside of the tubes 7, 8 by causing turbulence, which is beneficial for heat exchange but rises pressure drop. Hence, in order to create an optimal heat exchanger 1, it is important to tune the heat exchanger 1 such that heat exchange is maximized while pressure drop is kept low, especially at different flow rates of the fluid passing trough the tubes 7, 8 along said fluid flow paths P.

To render that possible in an effective way the header plates 9, 10 of the heat exchanger 1 according to the invention comprise throughout identical tube insertion orifices 11. In these tubes 7, 8 belonging to a primary and a secondary group of differently designed tubes are inserted in a tightly fitting way and fastened, e. g. by brazing.

The tubes 7 belonging to said primary group are in this context called base tubes 7, as they so to say fulfill basic heat exchange demands of a heat exchanger 1. The tubes 8 belonging to said secondary group are in this context instead called adaptation tubes 8, as they are used to locally change properties of the heat exchanger 1 in critical areas. Where these critical areas are to be found and how they are dealt with according to the invention is explained below by means of examples relating only to the top header plate 9.

The header plates 9 of figs. 2 to 13 reveal that all embodiments of the heat exchanger 1 shown in the drawings illustrate a two row coolant radiator. However, this does not have to be the case and is chosen only to exemplify some typical layout solutions within the frame of the invention as claimed. In other words, one single row of tubes 7, 8 or multiple rows of tubes 7, 8 as well as tubes 7, 8 turned in another way in relation to the header plates 9 are also within the scope.

Fig. 2 is used to illustrate an end portion, such as the top left portion of a heat exchanger 1 of fig. 1. As can be seen, of the totally twenty tubes shown in fig. 2, the fourteen to the right (seven per row) are depicted 7. Hence they are so-called base tubes 7 of the primary group of tubes, which in this case means that they have a standard tube wall thickness and dimples 12 on the inside. The remaining six tubes to the left (three per row) are instead so-called adaptation tubes 8 of the secondary group, which in this case means that they have a greater tube wall thickness and dimples 12 on the inside. The adaptation tubes 8 help stabilizing the heat exchanger 1 corner, where stress usually is higher, but rises pressure drop to a certain extent.

Fig. 3 illustrates a mid section somewhere along a header plate 9. This time a group of eight adaptation tubes 8 (four per row) corresponding to the ones of fig. 2 are arranged amid the base tubes 7. Again the purpose is to stabilize the heat exchanger 1 or alternatively to limit flow of fluid by causing an increased pressure drop, or both.

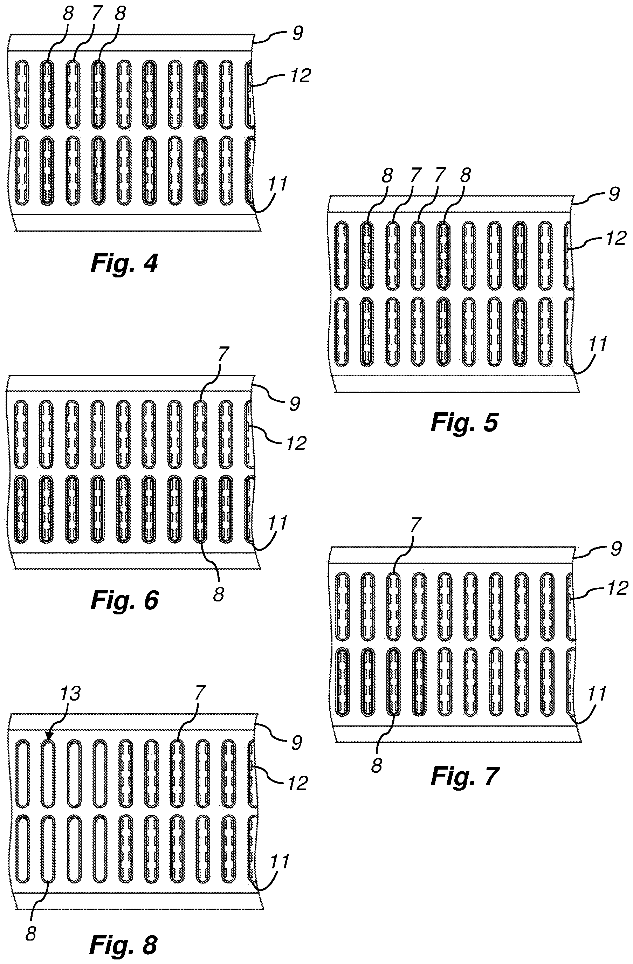

Figs. 4 and 5 do also illustrate a mid section somewhere along a header plate 9. The tubes 7 and 8 belonging to the primary and secondary group correspond to the ones described above and are arranged in an alternating pattern comprising rows of alternatingly a base tube 7 and a adaptation tube 8 or rows of alternatingly two base tubes 7 and a adaptation tube 8. By causing different pressure drops, the tubes 7, 8 help distribute flow evenly over the entire heat exchanger 1, especially at low fluid flow rates, which helps improving efficiency. However, the adaptation tubes 8 with their thicker gauge are of course beneficial for heat exchanger integrity as well.

Fig. 6 illustrates an arbitrary section along a header plate 9, while fig. 7 illustrates an end or corner portion, such as a top left end or corner portion of the heat exchanger 1 of fig. 1. In both embodiments base tubes 7 and adaptation tubes 8 of the same kind as before are used, that is base tubes 7 with a standard wall gauge and adaptation tubes 8 with a greater wall gauge. In the embodiment of fig. 6 there is one row of solely base tubes 7 and one row of solely adaptation tubes 8. The base tube row is preferably arranged close to a solid support, such as a charged air cooler, which helps withstand outer forces, while the more exposed part of the heat exchanger 1 shows reinforced tubes 8 only. The embodiment of fig. 7 is much alike, differing only in that just a few tubes in a corner portion of the heat exchanger 1 comprise strong adaptation tubes 8, such as a corner holding a fastening bracket (not shown). In that way it is possible to preserve heat exchanger integrity without causing excessive pressure drop.

In fig. 8 the base tubes 7 are again formed by dimpled tubes having a standard wall thickness and being arranged for instance in a mid sector along a header plate 9. The adaptation tubes 8, which for instance are arranged at an end portion of the header plate 9, are this time formed by all flat tubes void of any dimples. That makes it possible to strengthen the tubes 8 thanks to a smooth unaffected brazing seem, which is indicated by means of an arrow 13. An adaptation tube 8 of this kind renders it possible to strengthen the structure without a pressure drop increase or a thicker tube wall thickness, but lessens heat rejection to some extent.

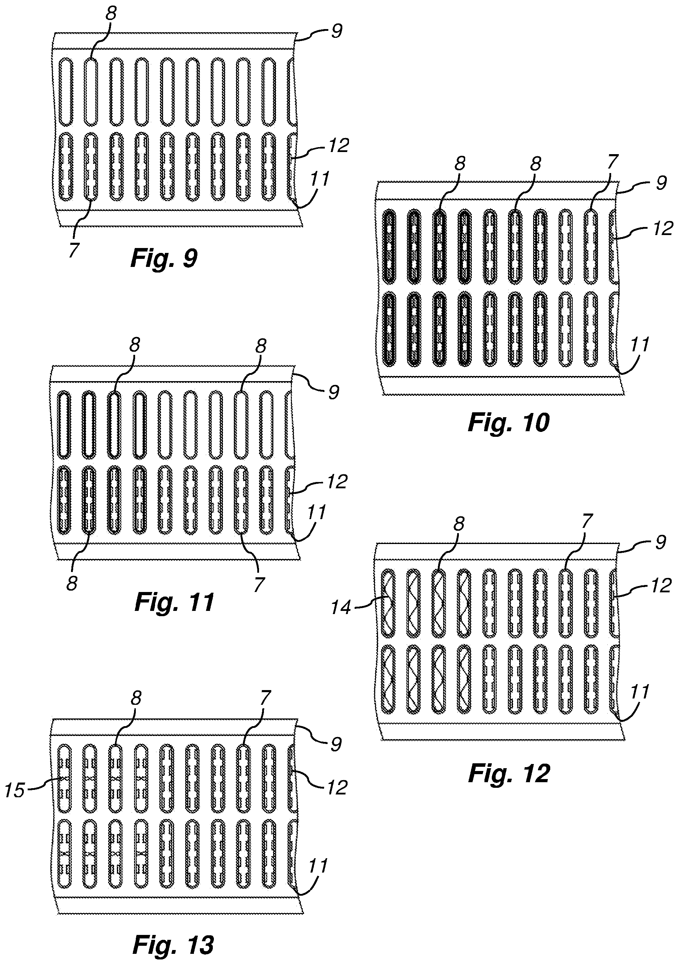

In the embodiment shown in fig. 9 the same kinds of tubes 7, 8 are used as in the embodiment in fig. 8. The difference lies in that this time there is a row with only dimpled base tubes 7 and all flat adaptation tubes 8. As described before, such a row solution can be used to influence fluid flow, in strengthening purposes, or both.

Fig. 10 and 11 reveal embodiments, which show that the group of adaptation tubes 8 can comprise more than one different kind of adaptation tubes, such as two in fig. 10 and three in fig. 11. As before there are standard dimpled base tubes 7, which in the embodiment of fig. 10 are arranged e.g. in a mid section along a header plate 9 of a heat exchanger 1, and in the embodiment of fig. 11 are arranged in a mid section, too, but only in one of two rows of tubes of a heat exchanger 1. In fig. 10 the remaining tubes, that is the adaptation tubes 8 at an end of the header plate 9 in question, comprise both eight outer tubes 8 with an extremely thick tube wall but yet provided with dimples 11, and six intermediate tubes 8 with a not quite as thick tube wall and dimples between said outer tubes 8 and said base tubes 7. In fig. 11 the dimpled base tubes 7 are arranged in just one row in a mid sector of a header plate 9 of a two row heat exchanger. To their left in the embodiment shown in fig. 11 and in the same row there are dimpled adaptation tubes 8 having a greater wall thickness. In the other row next to the base tubes 7 there are all smooth adaptation tubes 8 having a wall thickness corresponding to the one of the base tubes 7. Further, in the other row next to the dimpled adaptation tubes 8 again there are all smooth adaptation tubes 8, but these have a greater wall thickness than the ones next to the base tubes 7. In common the embodiments of fig. 10 and 11 show that there are few limits when it comes to optimizing a heat exchanger 1 by means of the invention, irrespective if one wishes to better mechanical strength or life of a heat exchanger or better efficiency or performance of a heat exchanger.

In fig. 12 a further embodiment of a heat exchanger 1 according to the invention is illustrated. As before the header plate 9 shown in fig. 12 has throughout identical tube insertion orifices 12. In these are fastened dimpled base tubes 7 in two rows to the right of eight (four in each row) adaptation tubes 8. These can be smooth or dimpled but have an end portion which enables insertion of a strengthening tube insert 14. The tube insert 14 is adapted to be brazed to the tube 8 and stiffens said end portion considerably without affecting fluid flow all too much.

In fig. 13 a final embodiment of a header plate 9 of the heat exchanger 1 of fig. 1 is shown. The kind and placement of the base tubes 7 corresponds exactly to the embodiment of fig. 12. Hence, again the adaptation tubes 8 are the ones that differ. This time they provide an enhanced strength by comprising internal stiffening ribs 15, which can be stamped just like dimples 12. Preferably the stiffening ribs 15 of the adaptation tubes 8 meat in a central part of the tubes 8 and interconnect by means of a brazing seam (not depicted). Influence on fluid flow is comparable to the one of the dimpled base tubes 7. In other words, the purpose of these adaptation tubes 8 in mainly a structural one.

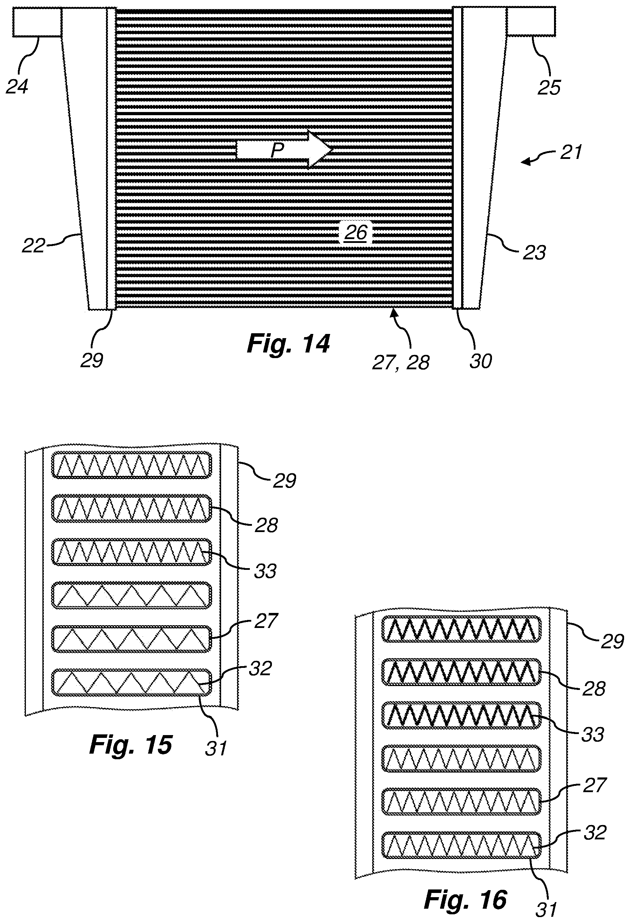

I fig. 14 a heat exchanger 21 is shown in a front view. The heat exchanger 21 shown is a charged air cooler (CAC), which has a left inlet tank 22 and a right outlet tank 23. Between these is a parallelepipedic CAC core 26, which comprises a plurality of horizontal tubes 27, 28 and fins (not shown) there between. The tubes 27, 28 are tightly connected to the tanks 22, 23 by means of header plates 29, 30 and are used to lead charged air from a fluid inlet 24 on the inlet tank 22 to a fluid outlet 25 on the outlet tank 23 while being cooled on its way along fluid flow paths illustrated by means of an arrow P.

In order to enhance cooling, the tubes 27, 28 of a CAC 21 are usually provided with turbulators, by which are meant formed metal sheet inserts brazed to the inside of said tubes. In the drawings in figs. 15 to 20 the turbulators are generally depicted 32, 33 and shown to be substantially corrugated. However, in reality they can have a totally different shape. Therefore the versions shown in figs. 15 to 20 are only to be viewed as mere examples.

Depending on temperatures, pressures and geometry, in a CAC 21 fluid flow through different tubes 27, 28 of the CAC core 26 is difficult to distribute evenly. Due to rather high temperatures in a CAC 21, this can easily lead to structural failure. Further, inefficiently used tubes 27, 28 do lower overall efficiency.

To mitigate these problems tanks 22, 23 of a CAC 21 usually are formed such that they taper from a fluid inlet 24 or fluid outlet 25, but that measure alone does not really suffice. Hence, according to the principle of the present invention even for the CAC heat exchanger 21 tubes 27, 28 belonging to two different groups of tubes are used for flow and temperature tuning and structural integrity. How this is done is illustrated by means of the embodiments shown in figs. 15 to 20.

In fig. 15 a portion of the left header plate 29 of fig. 14 is shown. The corresponding view of the opposite or right header plate 30 is often identical but need not be. However, having studied the description a person skilled in the art will anyway know how to best implement the present invention.

The header plate 29 comprises a number of identical tube insertion orifices 31, in which tubes 27, 28 fit tightly by being brazed or welded. The insertion orifices 31 are in this case arranged horizontally and in a single row, one above the other. However, they could also be arranged vertically and/or in two or more rows.

In fig. 15 the bottom three tubes are so-called base tubes 27 which belong to a primary group of tubes, whereas the top three tubes are so-called adaptation tubes 28 and belong to a secondary group of tubes. The base tubes 27 and adaptation tubes 28 differ in that they comprise differently shaped turbulators 32, 33. The ones 32 of the base tubes 27 show a wide undulation pattern, which gives them a lower heat dissipation capacity than the more narrowly undulated turbulators 33 of the adaptation tubes 28. On the other hand, due the turbulators 33 the adaptation tubes 28 cause a higher pressure drop, which makes fluid more prone to pass through the base tubes 27. In other words the adaptation tubes can be used to steer excessive fluid flow away from parts of the CAC, such as highly loaded parts close to the fluid inlet 24.

The embodiment of fig. 16 is quite similar to the one of fig. 15. It differs only in that the undulations of the turbulators 32 of the base tubes 27 are undulated just as narrow as the ones 33 of the adaptation tubes 28. However, the turbulators 33 of the adaptations tubes 28 are made of a thicker metal sheet, which leads to the desired difference between the two types of tubes 27, 28, with an extra emphasis on durability.

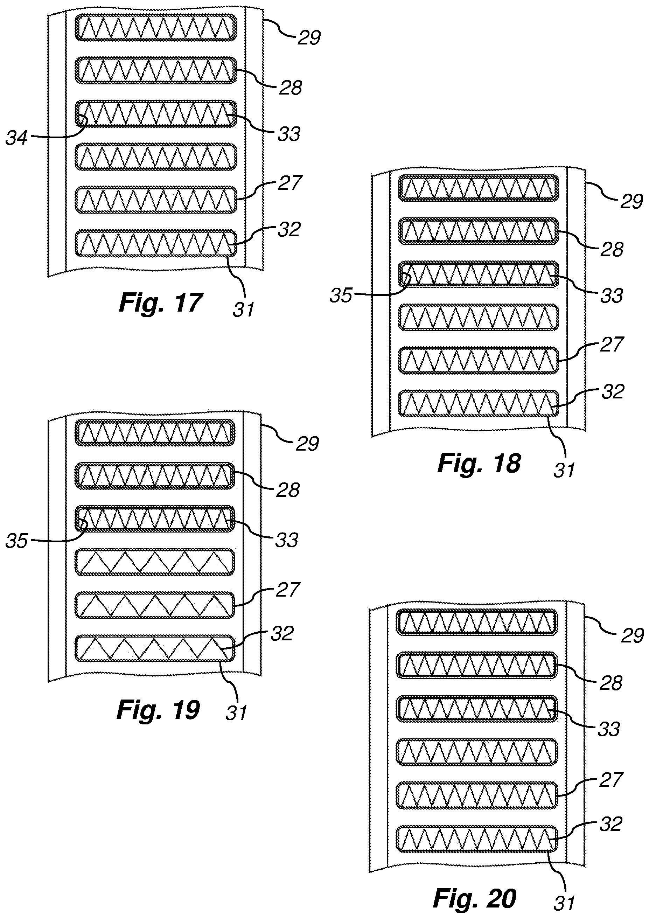

In fig. 17 the bottom three tubes are base tubes 27 corresponding to the ones of fig. 16. In the top three or adaptation tubes 28, the turbulators 33 are much alike the turbulators 32 of the base tubes 27 but have curled flanges 34 which stiffen short sides of the adaptation tubes 28. Said flanges 34 do hardly influence fluid flow, which means this embodiment mainly is suited to extend life in critical areas of a CAC 21.

In figs. 18 and 19 the bottom three tubes are base tubes 27 belonging to the primary group of tubes. As in some other cases before they differ in that their turbulators 32, 33 show differently wide undulations. The top three tubes in both figures are instead alike and comprise identically undulated turbulators as well as tubular stiffening inserts 35 fitting exactly into the adaptation tubes 28. The stiffening inserts 35 do influence fluid flow and lead to an enhanced strength. Hence use of tubes 27, 28 according to the embodiments of figs. 18 and 19 is advantageous in heat exchanger areas where load is high, such as next to an inlet 24.

In the final drawing figure, fig. 20, there are three base tubes 27 at the bottom and three adaptation tubes 28 at the top, all tubes 27, 28 according to the present invention being inserted in identical tube insertion orifices 31 of a header plate 29. The turbulators 32, 33, which are inserted in both types of tubes are substantially alike, except for the fact that the ones 33 in the adaptation tubes 28 are a little smaller. This is due to the fact that the adaptation tubes 28 have a greater wall thickness than the base tubes 27. This limits fluid flow to some degree but leads to an enhanced overall strength.

A person skilled in the art is aware that alterations of the embodiments described are possible within the scope of the appended claims.

## Claims

1. A heat exchanger (1; 21) comprising one inlet tank (2; 22), having a fluid inlet (4; 24) for a fluid, and one outlet tank (3; 23), having a fluid outlet (5; 25) for said fluid, and a core (6; 26) of tubes (7, 8; 27; 28) joining said one inlet tank (2; 22) and said one outlet tank (3; 23) together and creating a plurality of fluid flow paths (P) for said fluid from said one inlet tank (2; 22) to said one outlet tank (3; 23), wherein said tubes (7, 8; 27, 28) belong to a primary and a secondary group of tubes, c h a r act e r i sed in that said tubes (7, 8; 27; 28) having a throughout identical outer shape and internally varied characteristics, that said one inlet tank (2; 22) comprises a header plate (9; 29), which forms a core interface of said one inlet tank (2; 22), that said one outlet tank (3; 23) comprises a header plate (10; 30), which forms a core interface of said one outlet tank (3; 23), that said header plates (9, 10; 29, 30) comprise throughout identical tube insertion orifices (11; 31) for both the primary group of tubes (7; 27) and the secondary group of tubes (8; 28), that the tubes being a member of the primary group are base tubes (7; 27), and that the tubes being a member of the secondary group are adaptation tubes (8; 28), which are designed differently than the base tubes (7; 27) of the primary group and are used to locally change properties of the heat exchanger (1; 21) in critical areas of the heat exchanger (1; 21).

2. The heat exchanger (1; 21) according to claim 1, wherein said secondary group in order to prolong life of the heat exchanger (1; 21) comprises adaptation tubes (8; 28) each providing an enhanced strength compared to a basic strength provided by each one of said base tubes (7; 27), wherein said adaptation tubes (8; 28) are used in areas of the heat exchanger (1; 21) where stress levels tend to be higher than a medium stress level of the entire heat exchanger (1; 21).

3. The heat exchanger (1; 21) according to claim 2, wherein said adaptation tubes (8; 28) provide an enhanced strength by having a wall thickness exceeding a wall thickness of the base tubes (7; 27).

4. The heat exchanger (1; 21) according to claim 2, wherein said adaptation tubes (8; 28) provide an enhanced strength by comprising stiffening inserts (14; 34) arranged in tube openings.

5. The heat exchanger (21) according to claim 2, wherein said adaptation tubes (28) provide an enhanced strength by comprising stiffer turbulators (33) than turbulators (32) arranged in said base tubes (27).

6. The heat exchanger (1) according to claim 2, wherein said adaptation tubes (8) provide an enhanced strength by comprising internal stiffening ribs (15).

7. The heat exchanger (1) according to claim 2, wherein said adaptation tubes (8) provide an enhanced strength by comprising extra durable tube seams (13) created by means of all smooth tube walls.

8. The heat exchanger (1; 21) according to any one of claims 2-7, wherein said heat exchanger (1; 21) comprises a first row of tubes and a second row of tubes, and wherein at least a plurality of the tubes of the first row belong to the primary group of tubes (7; 27) and all tubes of the second row belong to the secondary group of tubes (8; 28).

9. The heat exchanger (1; 21) according to claim 1, wherein said secondary group in order to improve efficiency of the heat exchanger (1; 21) comprises adaptation tubes (8; 28), each providing a lower flow resistance than a flow resistance provided by each one of said base tubes (7; 27), wherein said adaptation tubes (8; 28) are arranged in areas of the heat exchanger (1; 21) where fluid flow levels tend to be lower than a medium fluid flow level of the entire heat exchanger (1; 21).

10. The heat exchanger (21) according to claim 9, wherein said adaptation tubes (28) provide a lower flow resistance by comprising turbulators (33) causing a lower flow resistance than turbulators (32) being arranged in said base tubes (27).

11. The heat exchanger (1) according to claim 9, wherein said adaptation tubes (8) provide a lower flow resistance by having all smooth walls, while said base tubes (7) have dimpled (12) walls.

12. The heat exchanger (1; 21) according to any one of claims 9-11, wherein said heat exchanger (1; 21) comprises a first row of tubes and a second row of tubes, and wherein all tubes of the first row belong to the secondary group of tubes (8; 28) and all tubes of the second row belong to the primary group of tubes (7; 27).

13. The heat exchanger (1; 21) according to claim 1, wherein said secondary group comprises adaptation tubes (8; 28), each providing a lower flow resistance than a flow resistance provided by each one of said base tubes (7; 27), wherein said adaptation tubes (8; 28) are arranged in the heat exchanger (1; 21) in an alternating pattern mixed with base tubes (7; 27).

14. The heat exchanger (21) according to claim 13, wherein said adaptation tubes (8) provide a lower flow resistance by comprising turbulators (33) causing a lower flow resistance than turbulators (32) being arranged in said base tubes (7).

15. The heat exchanger (1) according to claim 13, wherein said adaptation tubes (8) provide a lower flow resistance by having all smooth walls, while said base tubes (7) have dimpled (12) walls.

16. The heat exchanger (1; 21) according to any one of claims 13-15, wherein said alternating pattern comprises a row of alternatingly a base tube (7; 27) and an adaptation tube (8; 28).

17. The heat exchanger (1; 21) according to any one of claims 13-15, wherein said alternating pattern comprises a row of alternatingly two base tubes (7; 27) and an adaptation tube (8; 28).

18. The heat exchanger (1; 21) according to any one of the preceding claims, wherein said secondary group of tubes (8; 28) is subdivided into at least two kinds of differently designed tubes.

## Patentansprüche

1. Wärmetauscher (1; 21), umfassend einen Einlasstank (2; 22), der einen Flüssigkeitseinlass (4; 24) für eine Flüssigkeit aufweist, und einen Auslasstank (3; 23), der einen Flüssigkeitsauslass (5; 25) für die Flüssigkeit aufweist, und einen Kern (6; 26) von Rohren (7, 8; 27; 28), der den einen Einlasstank (2; 22) mit dem einen Auslasstank (3; 23) verbindet und mehrere Flüssigkeitsflusspfade (P) für die Flüssigkeit aus dem einen Einlasstank (2; 22) in den einen Auslasstank (3; 23) bildet, wobei die Rohre (7, 8; 27, 28) zu einer Haupt- und einer Nebengruppe Rohre gehören, **dadurch gekennzeichnet, dass** die Rohre (7, 8; 27; 28) eine durchgehend identische äußere Form und innerlich verschiedene Eigenschaften aufweisen, dass der eine Einlasstank (2; 22) eine Kopfplatte (9; 29) umfasst, die eine Kernschnittstelle des Einlasstanks (2; 22) bildet, dass der eine Auslasstank (3; 23) eine Kopfplatte (10; 30) umfasst, die eine Kernschnittstelle des einen Auslasstanks (3; 23) bildet, dass die Kopfplatten (9, 10; 29, 30) durchgehend identische Rohreinführungsöffnungen (11; 31) für die Hauptgruppe der Rohre (7; 27) und die sekundäre Gruppe der Rohre (8; 28) aufweisen, dass die Rohre, die zu der Hauptgruppe gehören, Basisrohre (7; 27) sind, und die Rohre, die zu der sekundären Gruppe sind, Anpassungsrohre (8; 28) sind, die anders aufgebaut sind als die Basisrohre (7; 27) der Hauptgruppe und die verwendet werden, um die Eigenschaften des Wärmetauschers (1; 21) in kritischen Bereichen des Wärmetauschers (1; 21) lokal zu ändern.

2. Wärmetauscher (1; 21) nach Anspruch 1, wobei die sekundäre Gruppe Anpassungsrohre (8; 28) umfasst, die jeweils eine höherer Stärke als eine Basisstärke bereitstellen, die jedes der Basisrohre (7; 27) bereitstellt, um die Standzeit des Wärmetauschers (1; 21) zu verlängern, wobei die Anpassungsrohre (8; 28) in Bereichen des Wärmetauschers (1; 21) verwendet werden, in denen die Belastungspegel höher als ein mittlerer Belastungspegel des gesamten Wärmetauschers (1; 21) sind.

3. Wärmetauscher (1; 21) nach Anspruch 2, wobei die Anpassungsrohre (8; 28) eine erhöhte Stärke bereitstellen, indem sie eine Wanddicke aufweisen, die eine Wanddicke der Basisrohre (7; 27) überschreitet.

4. Wärmetauscher (1; 21) nach Anspruch 2, wobei die Anpassungsrohre (8; 28) eine erhöhte Stärke bereitstellen, indem sie Versteifungseinsätze (14; 34) umfassen, die in Rohröffnungen angeordnet sind.

5. Wärmetauscher (21) nach Anspruch 2, wobei die Anpassungsrohre (28) eine verbesserte Stärke bereitstellen, indem sie steifere Turbulatoren (33) umfassen als die Turbulatoren (32), die in den Basisrohren (27) angeordnet sind.

6. Wärmetauscher (1) nach Anspruch 2, wobei die Anpassungsrohre (8) eine verbesserte Stärke bereitstellen, indem sie innere Versteifungsrippen (15) umfassen.

7. Wärmetauscher (1) nach Anspruch 2, wobei die Anpassungsrohre (8) eine verbesserte Stärke bereitstellen, indem sie besonderes widerstandsfähige Rohrnähte (13) umfassen, die mittels vollkommen glatter Rohrwände erstellt sind.

8. Wärmetauscher (1; 21) nach einem der Ansprüche 2 bis 7, wobei der Wärmetauscher (1; 21) eine erste Reihe Rohre und eine zweite Reihe Rohre umfasst, und wobei mindestens mehrere der Rohre der ersten Reihe zur Hauptgruppe der Rohre (7; 27) gehören und alle Rohre der zweiten Reihe zur sekundären Gruppe der Rohre (8; 28) gehören.

9. Wärmetauscher (1; 21) nach Anspruch 1, wobei die sekundäre Gruppe Anpassungsrohre (8; 28) umfasst, die jeweils einen geringeren Flusswiderstand als den Flusswiderstand bereitstellt, den jedes der Basisrohre (7; 27) bereitstellt, um die Effizienz des Wärmetauschers (1; 21) zu verbessern, wobei die Anpassungsrohre (8; 28) in Bereichen des Wärmetauschers (1; 21) angeordnet sind, in denen die Flusswiderstandspegel geringer als ein mittlerer Flusswiderstandspegel des gesamten Wärmetauschers (1; 21) sind.

10. Wärmetauscher (21) nach Anspruch 9, wobei die Anpassungsrohre (28) einen geringeren Flusswiderstand bereitstellen, indem sie Turbulatoren (33) umfassen, die einen geringeren Flusswiderstand bereitstellen als Turbulatoren (32), die in den Basisrohren (27) angeordnet sind.

11. Wärmetauscher (1) nach Anspruch 9, wobei die Anpassungsrohre (8) einen geringeren Flusswiderstand bereitstellen, indem sie ganz glatte Wände aufweisen, während die Basisrohre (7) Wände mit Eindrücken (12) aufweisen.

12. Wärmetauscher (1; 21) nach einem der Ansprüche 9 bis 11, wobei der Wärmetauscher (1; 21) eine erste Reihe Rohre und eine zweite Reihe Rohre umfasst, und wobei alle Rohre der ersten Reihe zur sekundären Gruppe der Rohre (8; 28) gehören und alle Rohre der zweiten Reihe zur Hauptgruppe der Rohre (7; 27) gehören.

13. Wärmetauscher (1; 21) nach Anspruch 1, wobei die sekundäre Gruppe Anpassungsrohre (8; 28) umfasst, die jeweils einen geringeren Flusswiderstand als den Flusswiderstand bereitstellt, den jedes der Basisrohre (7; 27) bereitstellt, wobei die Anpassungsrohre (8; 28) in dem Wärmetauscher (1; 21) in einem abwechselnden Muster mit Basisrohren (7; 27) angeordnet sind.

14. Wärmetauscher (21) nach Anspruch 13, wobei die Anpassungsrohre (8) einen geringeren Flusswiderstand bereitstellen, indem sie Turbulatoren (33) umfassen, die einen geringeren Flusswiderstand bereitstellen als Turbulatoren (32), die in den Basisrohren (7) angeordnet sind.

15. Wärmetauscher (1) nach Anspruch 13, wobei die Anpassungsrohre (8) einen geringeren Flusswiderstand bereitstellen, indem sie ganz glatte Wände aufweisen, während die Basisrohre (7) Wände mit Eindrücken (12) aufweisen.

16. Wärmetauscher (1; 21) nach einem der Ansprüche 13 bis 15, wobei das abwechselnde Muster eine Reihe umfasst, die abwechselnd ein Basisrohr (7; 27) und ein Anpassungsrohr (8; 28) aufweist.

17. Wärmetauscher (1; 21) nach einem der Ansprüche 13 bis 15, wobei das abwechselnde Muster eine Reihe umfasst, die abwechselnd zwei Basisrohre (7; 27) und ein Anpassungsrohr (8; 28) aufweist.

18. Wärmetauscher (1; 21) nach einem der vorhergehenden Ansprüche, wobei die sekundäre Gruppe der Rohre (8; 28) in mindestens zwei Arten verschieden aufgebauter Rohe unterteilt ist.

## Revendications

1. Échangeur de chaleur (1 ; 21) comprenant un réservoir d'entrée (2, 22) comportant une entrée de fluide (4 ; 24) pour un fluide, et un réservoir de sortie (3 ; 23) comportant une sortie de fluide (5 ; 25) pour ledit fluide, et un noyau (6 ; 26) de tubes (7, 8 ; 27 ; 28) reliant ledit réservoir d'entrée (2, 22) et ledit réservoir de sortie (3 ; 23) l'un à l'autre et créant une pluralité de trajets d'écoulement de fluide (P) pour ledit fluide, dudit réservoir d'entrée (2, 22) audit réservoir de sortie (3 ; 23), dans lequel lesdits tubes (7, 8 ; 27 ; 28) appartiennent à un groupe primaire et à un groupe secondaire de tubes, **caractérisé en ce que** lesdits tubes (7, 8 ; 27 ; 28) présentent une forme extérieure entièrement identique et des caractéristiques internes différentes, **en ce que** ledit réservoir d'entrée (2, 22) comprend une plaque de tête (9 ; 29) formant une interface centrale dudit réservoir d'entrée (2, 22), **en ce que** ledit réservoir de sortie (3 ; 23) comprend une plaque de tête (10 ; 30) formant une interface centrale dudit réservoir de sortie (3 ; 23), **en ce que** lesdites plaques de tête (9, 10 ; 29, 30) comprennent des orifices d'insertion de tube (11 ; 31) entièrement identiques pour le groupe de tubes primaire (7 ; 27) et le groupe de tubes secondaire (8 ; 28), **en ce que** les tubes faisant partie du groupe primaire sont des tubes de base (7 ; 27), et **en ce que** les tubes faisant partie du groupe secondaire sont des tubes d'adaptation (8 ; 28) conçus différemment des tubes de base (7 ; 27) du groupe primaire et sont utilisés pour modifier localement des propriétés de l'échangeur de chaleur (1 ; 21) dans des zones critiques de l'échangeur de chaleur (1 ; 21).

2. Échangeur de chaleur (1 ; 21) selon la revendication 1, dans lequel, pour prolonger la durée de vie de l'échangeur de chaleur (1 ; 21), ledit groupe secondaire comprend des tubes d'adaptation (8 ; 28) présentant respectivement une résistance accrue par rapport à une résistance de base fournie par chacun desdits tubes de base (7 ; 27), dans lequel lesdits tubes d'adaptation (8 ; 28) sont utilisés dans des zones de l'échangeur de chaleur (1 ; 21) où les niveaux de tension ont tendance à être plus élevés qu'un niveau de tension moyen de l'ensemble de l'échangeur de chaleur (1 ; 21).

3. Échangeur de chaleur (1 ; 21) selon la revendication 2, dans lequel lesdits tubes d'adaptation (8 ; 28) fournissent une résistance accrue en ce qu'ils présentent une épaisseur de paroi supérieure à une épaisseur de paroi des tubes de base (7 ; 27).

4. Échangeur de chaleur (1 ; 21) selon la revendication 2, dans lequel lesdits tubes d'adaptation (8 ; 28) fournissent une résistance accrue en ce qu'ils comprennent des inserts de renforcement (14 ; 34) disposés dans des ouvertures de tube.

5. Échangeur de chaleur (21) selon la revendication 2, dans lequel lesdits tubes d'adaptation (28) fournissent une résistance accrue en ce qu'ils comprennent des turbulateurs (33) plus rigides que des turbulateurs (32) disposés dans lesdits tubes de base (27).

6. Échangeur de chaleur (1) selon la revendication 2, dans lequel lesdits tubes d'adaptation (8) fournissent une résistance accrue en ce qu'ils comprennent des nervures de renforcement internes (15).

7. Échangeur de chaleur (1) selon la revendication 2, dans lequel lesdits tubes d'adaptation (8) fournissent une résistance accrue en ce qu'ils comprennent des soudures de tube (13) ultra résistantes réalisées à l'aide de toutes les parois de tube lisses.

8. Échangeur de chaleur (1 ; 21) selon l'une quelconque des revendications 2 à 7, dans lequel ledit échangeur de chaleur (1 ; 21) comprend une première rangée de tubes et une deuxième rangée de tubes, et dans lequel au moins plusieurs des tubes de la première rangée appartiennent au groupe de tubes primaire (7 ; 27) et tous les tubes de la deuxième rangée appartiennent au groupe de tubes secondaire (8 ; 28).

9. Échangeur de chaleur (1 ; 21) selon la revendication 1, dans lequel, pour améliorer l'efficacité de l'échangeur de chaleur (1 ; 21), ledit groupe secondaire comprend des tubes d'adaptation (8 ; 28) fournissant respectivement une résistance à l'écoulement plus faible qu'une résistance à l'écoulement fournie par chacun desdits tubes de base (7 ; 27), dans lequel lesdits tubes d'adaptation (8 ; 28) sont disposés dans des zones de l'échangeur de chaleur (1 ; 21) où des niveaux d'écoulement de fluide ont tendance à être plus bas qu'un niveau d'écoulement de fluide moyen de l'ensemble de l'échangeur de chaleur (1 ; 21).

10. Échangeur de chaleur (21) selon la revendication 9, dans lequel lesdits tubes d'adaptation (28) présentent une résistance à l'écoulement plus faible en ce qu'ils comprennent des turbulateurs (33) entraînant une résistance à l'écoulement plus faible que des turbulateurs (32) disposés dans lesdits tubes de base (27).

11. Échangeur de chaleur (1) selon la revendication 9, dans lequel lesdits tubes d'adaptation (8) présentent une résistance à l'écoulement plus faible en ce qu'ils comportent tous des parois lisses, tandis que lesdits tubes de base (7) comportent des parois bosselées (12).

12. Échangeur de chaleur (1 ; 21) selon l'une quelconque des revendications 9 à 11, dans lequel ledit échangeur de chaleur (1 ; 21) comprend une première rangée de tubes et une deuxième rangée de tubes, et dans lequel tous les tubes de la première rangée appartiennent au groupe de tubes secondaire (8 ; 28) et tous les tubes de la deuxième rangée appartiennent au groupe de tubes primaire (7 ; 27).

13. Échangeur de chaleur (1 ; 21) selon la revendication 1, dans lequel ledit groupe secondaire comprend des tubes d'adaptation (8 ; 28) présentant respectivement une résistance à l'écoulement plus faible qu'une résistance à l'écoulement fournie par chacun desdits tubes de base (7 ; 27), dans lequel lesdits tubes d'adaptation (8 ; 28) sont disposés dans l'échangeur de chaleur (1 ; 21) selon un motif alterné avec des tubes de base (7 ; 27).

14. Échangeur de chaleur (21) selon la revendication 13, dans lequel lesdits tubes d'adaptation (8) présentent une résistance à l'écoulement plus faible en ce qu'ils comprennent des turbulateurs (33) entraînant une résistance à l'écoulement plus faible que des turbulateurs (32) disposés dans lesdits tubes de base (7).

15. Échangeur de chaleur (1) selon la revendication 13, dans lequel lesdits tubes d'adaptation (8) présentent une résistance à l'écoulement plus faible en ce qu'ils comportent tous des parois lisses, tandis que les tubes de base (7) comportent des parois bosselées (12).

16. Échangeur de chaleur (1 ; 21) selon l'une quelconque des revendications 13 à 15, dans lequel ledit motif alterné comprend une rangée dans laquelle s'alternent un tube de base (7 ; 27) et un tube d'adaptation (8 ; 28).

17. Échangeur de chaleur (1 ; 21) selon l'une quelconque des revendications 13 à 15, dans lequel ledit motif alterné comprend une rangée dans laquelle s'alternent deux tubes de base (7 ; 27) et un tube d'adaptation (8 ; 28).

18. Échangeur de chaleur (1 ; 21) selon l'une quelconque des revendications précédentes, dans lequel ledit groupe de tubes secondaire (8 ; 28) est sous-divisé en au moins deux types de tubes conçus différemment.
